# DEMANDE DE BREVET EUROPEEN

(11) **EP 0 555 610 A1**
(43) Date de publication de la demande: **18.08.1993**
(21) Numéro de dépôt: 92500090.3
(22) Date de dépôt: 14.07.1992
(51) Int. Cl.: A47J 37/07

(54) **Barbeque à usages multiples perfectionné**

(71) Demandeur: Marinez Mendiguchia, Miguel Angel, E-39005 Santander (ES)
(72) Inventeur: Marinez Mendiguchia, Miguel Angel, E-39005 Santander (ES)
(74) Mandataire: De la Fuente Fernandez, Dionisio

(57) **Abrégé**

Barbecue à usages multiples perfectionné, formé par un récipient cylindrique (7) avec un orifice central pourvu d'un rebord ayant une hauteur suffisante pour empêcher que les braises tombent à l'intérieur, et par cet orifice passe une double broche verticale (6) qui est fixée par son extrêmité supérieure à un gril formé par des angles radiaux qui conforment une superficie conique avec une inclinaison vers le centre ou vers l'extérieur. Sous ce récipient est ajusté un autre qui fait office de cendrier (1), tous les deux s'unissant par des anses communes et ayant une pièce isolante de contact qui permet d'inverser la position du gril pourqu'il reste comme un couvercle dans la position de transport et d'emmagasinage. Des pattes isolantes (3) distribuées régulièrement au fond du cendrier (1), susceptibles d'être accouplées à des rallonges télescopiques (15) permettent de bien placer l'ensemble soit sur une table ou similaire, soit sur le sol à la hauteur désirée.

## Description

### SECTEUR D'APPLICATION DU BREVET

Cette barbecue à usages multiples perfectionnée à laquelle a trait le présent Brevet d'Invention, sera appliquée dans le secteur de l'industrie se référant à la fabrication d'ustensiles de type domestique, ayant comme finalité d'obtenir des élements pour cuisiner des aliments de n'importe quel type d'une façon simple et commode dans les dites barbecues, formées par un gril situé sur une base dans laquelle est fournie la chaleur suffisante pour le rôti et l'assaisonnement des viandes et du poisson.

### ETAT DE LA TECHNIQUE

Parmi la grande variété de barbecues existant dans le marché, on trouve des réalisations différentes qui ont pour objet d'obtenir les meilleures conditions d'usage ainsi que les possibilités d'emploi comme telle barbecue ou comme simple élément de chaleur pour y procéder à de différentes formes culinaires, mais on trouve dans toutes des difficultés, d'unepart pour obtenir une distance exacte entre les braises et le gril adéquate dans chaque cas à la finalité destinée, puisque généralement , ces grills se placent sur des encoches existantes dans les zones d'appui de ceux-ci, ce qui fait qu'il n'existe pas de distances intermédiaires entre celles marquées par les différentes encoches (généralement 3 encoches). Dans d'autres types de barbecues on procède à une installation compliquée de poulies, de chaines et de manivelles qui montent ou descendentles grils ce qui comporte un renchérissement considérable de l'ensemble.

### DESCRIPTION DE LA TECHNIQUE

Afin d'éliminer toutes ces conséquences d'incommodités et de coûts élevés on a formulé la barbecue multi-perfectionnée à laquelle a trait la présente Mémoire, dans laquelle on a prévu des caractéristiques spéciales de forme et de structure avec lesquelles on obtient en premier lieu et à tout moment une distance adéquate parfaite entre le gril et l'endroit où se situent les braises, dans une deuxième caractéristique spéciale on a prévu que le gril soit conformé par une série de canaux en sens radial et avec une inclinaison soit vers le centre, soit vers l'extérieur afin de diriger la graisse ou les liquides dégagés par la viande vers un endroit qui ne soit pas celui où sont les braises, dans ce cas vers le centre et canalisés postérieurement à un récipient, car on croit que c'est plus propre et hygiénique.

(On a constaté et vérifié que le feu direct des braises sur la viande fait que les liquides et les graisse de la viande elle-même se déplacent vers la zone où il y a moins dechaleur, précisément dansla zone des sillons, c'est à dire dans la zone où n'agissent pas directement les braises, et donc le dégouttement déverse dans les sillons ou les canaux inclinés et les résidus se déplacent à la fois vers la partie inférieure du gril, ce qui fait qu'on peut à peine apprécier la fumée dans un endroit fermé.)

Dans les barbecues normales on utilise des simples fils métalliques. On prévoit en outre un système d'élévation et de descente du gril au moyen de broches télescopiques tournantes qui permettent de choisir à tout moment la hauteur précise sans utiliser aucun type de souture, alors qu'elle est totalement démontable et se fixe avec un écrou spécial qui permet d'unir la broche à la casserole inférieure, le filet intérieur de cet écrou peut ètre connecté à la bouteille de camping gaz et extérieurement à un système d'anclage simple pour fixer le récipient de ramassage des résidus. Il dispose aussi d'une casserole inférieure sous le récipient des braises qui a une double utilité, elle permet d'abord de raviver les braises avec un soufflet et ensuite d'empêcher que la cendre des braises tombe parterre.

Tout cela a comme support une constitution spéciale des pattes au matériel isolant qui permettent de placer l'ensemble sur une table ou une superficie adéquate, ces pattes pouvant être substituées par d'autres pattes extensiblespar des rallonges pour situer la barbecue sur le sol et à la hauteur considérée la convenante dans chauque cas.

En essence, cette barbecue est formée par un braséro sensiblement cylindrique d'une petite hauteur, pourvu d'un orifice central avec un rebord vers le haut pour empêcher la sortie des braises vers la zone inférieure, et sur le brasero on prévoit l'accouplement du gril formé par une série de branches ou angles disposés radialement pour former une superficie conique, avec une inclinaison vers le centre ou la périphérie, ce gril est uni au moyen d'une vis ou une broche intérieure tournante pourvue d'une clavette prévue pour que le mouvement tournant fasse monter ou descendre le gril par rapport au niveau du brasero.

Sous le braséro est situé un cendrier qui reste accouplé à celui-ci moyennant les anses pour manipuler 1 ensemble, ces anses présentent dans ces génératrices de contact du matériel isolant qui empêche la transmission de la chaleur d'un récipient à l'autre.

Le cendrier est pourvu de pieds, sphériques de préférence, au matériel isolant qui permettent de placer l'ensemble sur une table ou similaire, sans qu'il y aie transmission de chaleur vers le support employé, ces pieds étant rétractiles, pour que dans la position de transport et d'emmagasinage elles restent pliées vers l'intérieur, alors que le brasero placé dans la pos ition inverse reste comme un couvercle dans cette position de transport et d'emmagasinage.

On a prévu aussi dans cette nouvelle barbecue la possibilité de placer sur le braséro un système de chauffage formé par des tubes en spirale ou en cercles concentriques avec des orifices de sortie , pour employer le gaz comme élément de chauffage, ou bien des résistances électriques pour employer l'électricité, et même un système combiné de gaz et d'électricité.

Sous l'êxtreme inférieur de la vis et de la frette qui forment la vis double télescopique qui est vide, on prévoit un dépôt pour le ramassage des graisses et des résidus provenant du rtissement effectué dans le gril, ce dépôt étant accouplé au moyen d'un filetage ou moyen de liaison similaire pour un accouplement et un désaccouplement faciles pour sa vidange et son nettoyage.

Les pattes rétractiles citées peuvent être substituées par d'autres pattes de type télescopique avec des rallonges, si on préfère situer l'ensemble sur le sol ou à la hauteur considérée la plus adéquate.

Par la suite on fera une description détaillée de la barbecue à usages multiples perfectionnée préconisée en se référant aux schémas qui l'accompagnent et dans lesquels on représente à simple titre d'exemple non limitatif, une façon préférente de réalisation, susceptible de toutes les variations de détail qui ne s upposent aucune altération fondamentale des ceractéristiques essentielles de celle-ci.

Dans ces schémas on illustre:
Dans la figure l:levé et section verticale de l'ensemble de la barbecuedans la version aux pattes extensibles.
Dans la figure 2: levé et section verticale de l'ensemble de la barbecue dans la version aux pattes rétractiles et la fixation du brasero au moyen des anses.
Dans la figure 3: vue supérieure du gril.
Dans la figure 4: Vue supérieure du cendrier.
Dans la figure 5: levé et section de la barbecue dans la position d'emmagasinage et de transport.

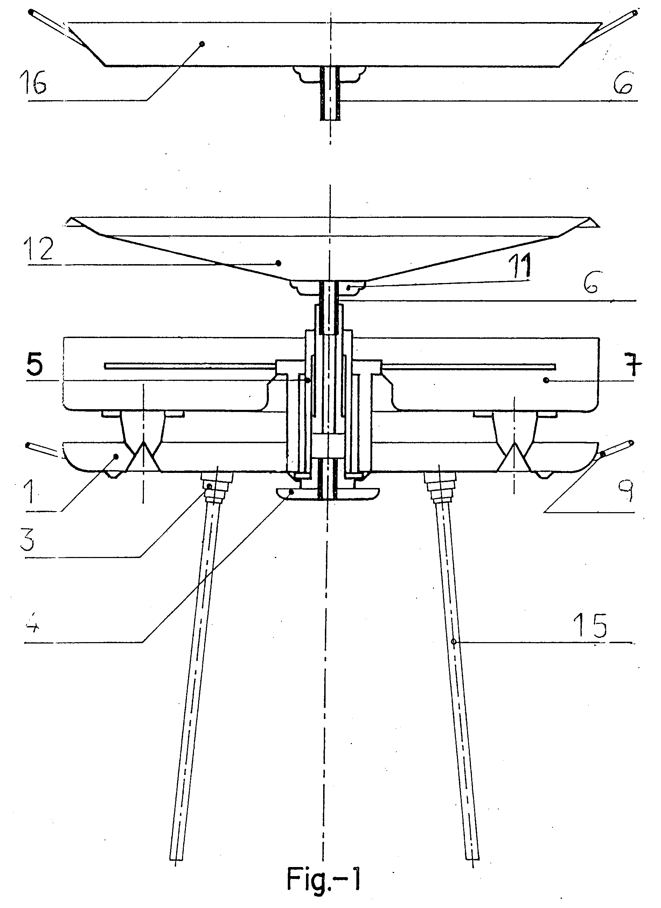

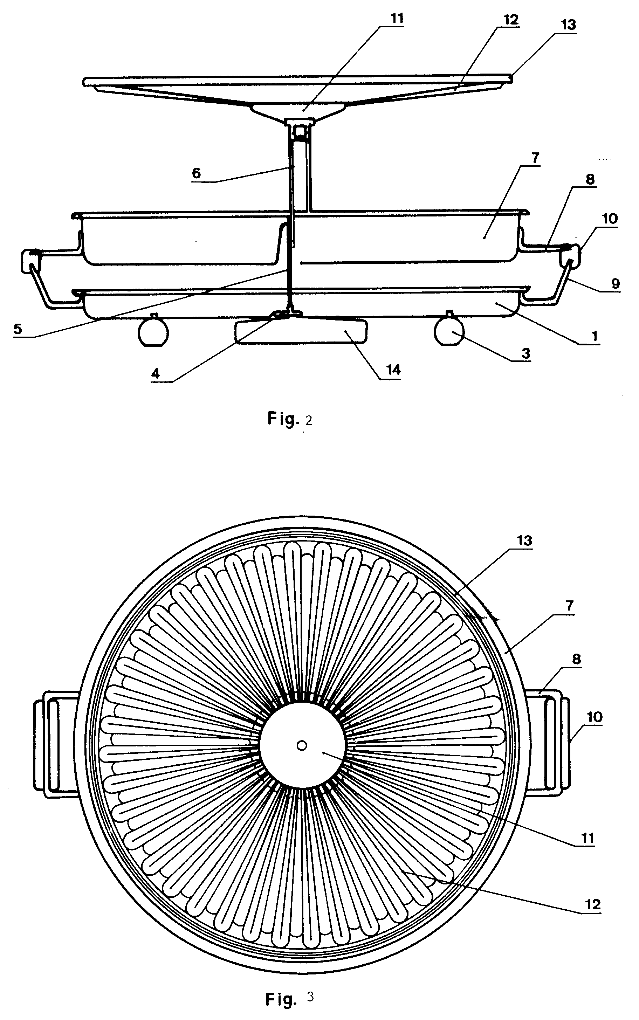

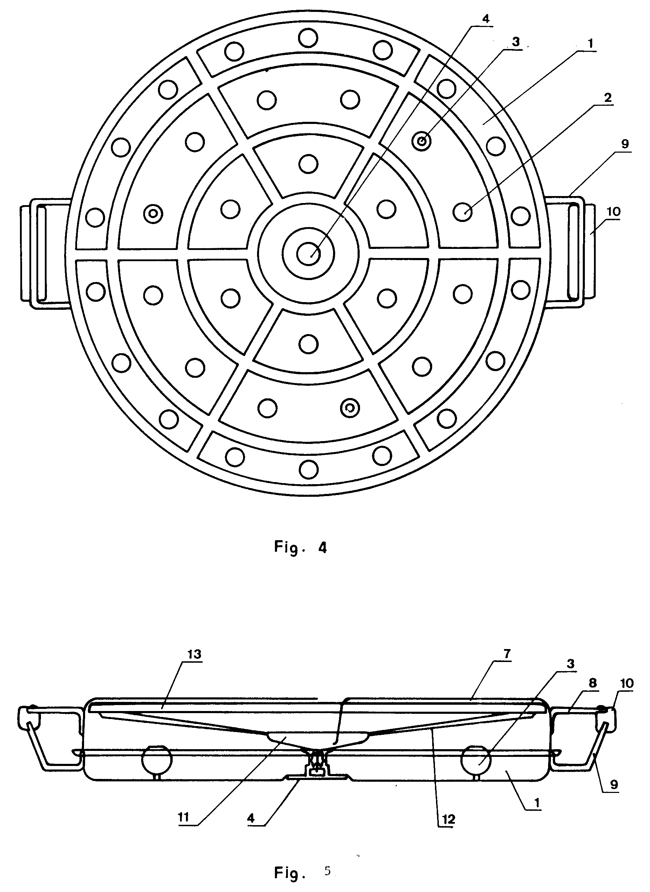

D'après l'exemple d'éxécution représenté, la nouvelle barbecue à usages multiples citée est constituée par un cendrier (1) à la forme cylindrique d'une hauteur peu élevée, pourvue de nombreux orifices(2) sur des cercles concentriques, en prévoyant que dans trois d'entre eux distribués sur un angle central de 120 degrés, on accouple des pieds (3) à la forme sphérique de préférence et en un matériel isolant pour appuyer l'ensemble sur n'importe quelle superficie, que ce soit une table ou autre similaire, sans que la chaleur puisse être transmise.

Au centre de ce cendrier (1) on prévoit un orifice (4) dans lequel est accouplé l'écrou support d'une frette (5) cylindrique et à la longueur adéquate, et dans lequel on inclue une broche (6) tournante avec une clavette ajustée à la frette pour que le mouvement tournant se traduise en un mouvement longitudinel ascendant ou descendant , en fonction du sens du mouvement.

Cette broche (6) àtravers un orifice central traverse le braséro (7) formé par une pièce cylindrique d'une hauteur peu élevée et le fond de sa superficie étant pourvu d'orifices régulièrement distribués, et ce braséro est pourvu de deux anses (8) diamétralement opposées, qui s'accouplent à d'autres anses similaires (9) existant dans le cendrier (1) moyennant l'interposition de frettes isolantes (10) et ainsi le cendrier et le brasero restent situés à une distance constante, parfaitement solidaires et sans la possibilité de transmission de chaleur de l'un à l'autre, grâce au matériel isolant (10) par lequel s'unissent les anses correspondantes.

Le brasero une fois traversé par la broche (6), celui-ci présente à son extrémité supérieure l'accouplement à un cône central (11) avec un orifice central pour le passage des graisses et des résidus à travers cette broche dont le cône comporte accouplés à sa périphérie les extrêmes d'une série de branches ou angles (12) disposés radialement et inclinés vers le centre ou vers la périphérie, où il existe un cercle (13) de section en U pour le ramassage des résidus et des graisses, si l'inclinaison se fait vers l'extérieur.

Sous l'écrou d'accouplement de la frette (5), on prévoit l'accouplement par filetage d'un dépôt (14) dans celui du gril, les graisses glissent à l'intérieur de la broche jusqu'à ce dépôt, en ayant un filetage facile pour obtenir une opération simple pour placer et retirer le dit dépôt afin de le vider et le nettoyer.

Ainsi organisée, la nouvelle barbecue, son emploi est aisé, puisqu'il suffit de situer sur le brasero les éléments de production de chaleur, les braises, les éléments de gaz, électriques ou la combinaison de ceux-ci, et moyennant le mouvement tournant de la broche (6) placer le gril (12) à la hauteur désirée à chaque occasion. Les résidus et les graisses restants glisseront le long des branches du gril pour être ramassés à travers la broche dans le dépôt inférieur (14).

Si on le désire, on peut situer dans le brasero (7) des éléments pour la production de chaleur par gaz, moyennant des tubes par lesquels passe le gaz et oui ont des orifices de sortie ou on peut situer des résistances électriques si on préfère ce système d'énergie, ou bien des combinaisons des deux solutions.

Pour rendre plus facile le transport et l'emmagasinage de la barbecue on a prévu que l'accouplement entre les anses (8et9) du brasero et du cendrier se fasse par simple pression, en les introduisant dans des rainures existant dans le matériel isolant (10) qui les uni, ce qui fait que sans autre tavail que celui de désaccoupler les dites anses et d'inverser la position du brasero, celui-ci fera comme un couvercle de l'ensemble, une fois le gril situé dans sa position la plus basse, en même temps que les pattes d'appui (3) sa placent à l'intérieur du cendrier, l'ensemble formant un simple ensemble fermé au transport facile et occupant un volume minimum pour être gardé dans n'importe quel endroit sans occuper un grand espace.

On a prévu en plus que les pieds (3) puissent s'accoupler à des pattes télescopiques avec des rallonges (15) dans les cas où on pour les cas où on désirera placer la barbecue parterre et à la hauteur considérée la plus adéquate et on a prévu aussi la possibilité d'accoupler sur le gril (12) un ustensile, paellera, casserole ou similaire (16) fixé à la même broche(6) et donc le gril peut être employé avec d'autres dáliments avec lesquels on n'utilise pas le gril, mais des récipients fermés qui contiennent des bouillons ou autres liquides similaires.

La forme, les matériaux et les dimensions pourront varier et en général tout ce qui soit accessoire et secondaire, et qui n'altère, ne change ou ne modifie jamais l'essentialité de l'objet décrit.

## Revendications

1. Barbecue à usages multiples perfectionnée, caractérisée par être constituée par un récipient cylindrique d'une hauteur peu élevée, avec le fond perforé et un orifice central pourvu d'un rebord d'une hauteur suffisante pour éviter que les braises tombent à l'intérieur du trou central, en restant inclus dans cet orifice central une broche métallique double dont l'êxtreme supérieur est ajusté à un gril formé par des branches ou angles radialement disposés qui conforment une superficie conique avec une inclinaison vers le centre ou l'extérieur, en prévoyant dans le premier cas un cône pour ramasser les graisses et les résidus, et dans le deuxième cas un cercle externe cannelé ayant le même but.

2. Barbecue à usages multiples perfectionnée d'après revendication première, se caractérise parcequ'on prévoit sous le récipient cylindrique un autre moins profond qui agit comme cendrier et les deux récipients s'unissent entre eux au moyen d'anses qui unissent leurs travées droites au moyen de pièces isolantes qui permettent de transporter l'ensemble, en même temps que, par l'inversion du brasero, il peut faire de couvercle dans laposition de transport et d'emmagasinage.

3. Barbecue à usages multiples perfectionnée, d'après les revendications première et deuxième, se caractérise parceque moyennant la broche double verticale on peut faire monter ou descendre le gril par rapport à la superficie du braséro, en prévoyant que cette broche soit creuse pour que descendent à l'intérieur les restants des graisses et des résidus, et en existant à son extrême inférieur un récipient accouplé par un filet pour le ramassage des résidus et des graisses.

4. Barbecue à usages multiples perfectionnée, d'après les revendications première à troisième, se caractérise par le fait que, à la base du cendrier à des points équidistants entre eux on accouple des pattes au matériel isolant susceptibles de recevoir des rallonges, ces pattes en position de transport et d'emmagasi nage restent situées dans la face interne du cendrier.

5. Barbecue à usages multiples perfectionnée, d'après les revendications première à quatrième, se caractérise par le fait qu'on peut placer sur le brasero un système de chauffage par gaz, à base de tubes de conduction pour celui-ci.

6. Barbecue à usages multiples perfectionnée, se caractérise,d'après les revendications première à cinquième, parcequ'on prévoit l'installation d'un système de chauffage électrique sur la face supérieure du brasero, moyennant des résistances.

7. Barbecue à usages multiples perfectionné, dáprès les revendications première à sixième, se caractérise parcequ'elle emploie un système de chauffage mixte de gaz et d'électricité combinés s sur la face supérieure du braséro.

8. Barbecue à usages multiples perfectionnée, d'après les revendications première à septième, se caractérise parcequ'on prévoit l'installation d'un récipient à l'extrême supérieur de la broche pour utiliser l'ensemble sans le gril dans la cuissson des aliments qui précisent d'un récipient qui contienne des liquides ou similaires.
Tel qu'il est décrit et revendiqué dans la présente Mémoire descriptive formée par dix feuilles dactylographiées au recto, et de trois schémas qui l'illustrent.
